# EUROPEAN PATENT APPLICATION

(11) **EP 4 498 490 A1**
(43) Date of publication of application: **29.01.2025**
(21) Application number: 23215264.5
(22) Date of filing: 08.12.2023
(51) Int. Cl.: H01M 50/169, H01M 50/152

(54) **SECONDARY BATTERY, BATTERY PACK, AND ELECTRONIC APPARATUS**

(30) Priority: 25.07.2023 CN 202321970692 U
(71) Applicant: AESC Japan Ltd., Yokohama-Shi, Kanagawa 220-0012 (JP)
(72) Inventor: CHE, Peipei, Jiangyin City, Wuxi City, 214443 (CN); QIAN, Jia, Jiangyin City, Wuxi City, 214443 (CN)
(74) Representative: Becker, Eberhard

(57) **Abstract**

A secondary battery pack (10) includes a case (110), a terminal (120), an electrode assembly (130), a first current collector (143), and a cover assembly. The case (110) includes an end wall (111) and a sidewall (112) surrounding the end wall (111). An opening (113) is formed at an end of the sidewall (112). The terminal (120) passes through and is insulated from the end wall (111). The electrode assembly (130) is accommodated in the case (110) and includes a first tab (132) and a second tab (131) electrically connected with the terminal (120). The first current collector (143) is disposed at an end of the electrode assembly (130) facing the opening (113) and connected with the first tab (132) by welding. The cover assembly includes first and second cover plates (141, 142). The first cover plate (141) covers the opening (113), is connected with the sidewall (112) and the first current collector (143) by welding, and includes a through hole (1411). The second cover plate (142) is welded to the first cover plate (141) and seals the through hole (1411).

## Description

### BACKGROUND

### Technical Field

The disclosure relates to a battery technique, and particularly relates to a secondary battery, a battery pack, and an electronic apparatus.

### Description of Related Art

Nowadays, due to the high safety, long service time, excellent fast charging performance, excellent battery consistency, and low production cost, large cylindrical batteries are favored by major vehicle manufacturers.

Currently, since the case of a large cylindrical battery is generally charged, the case itself may serve as the positive or negative electrode when the battery is assembled. Regarding the electrical connection between an electrode assembly inside the case and the case, the electrode assembly is connected with a first current collector on the case opening side, and the first current collector is welded to the sidewall of the case, thereby allowing the case to be charged. In a subsequent battery encapsulation process, since the sidewall of the case may be subjected to a relatively large squeezing force, there is a risk that the connection between the first current collector and the case may fail. Therefore, a secondary battery, a battery pack, and an electronic apparatus addressing the above issue is sought for.

### SUMMARY

In view of the above shortcomings of the related art, the disclosure provides a secondary battery, a battery pack, and an electronic apparatus capable of alleviating the connection failure due to the squeezing received during the encapsulation process in the case where the first current collector is welded to the sidewall of the case.

In order to realize the above and other related objectives, an aspect of the disclosure provides a secondary battery. The secondary battery pack includes a case, a terminal, an electrode assembly, a first current collector, and a cover assembly. The case includes an end wall and a sidewall surrounding the end wall. An opening is formed at an end of the sidewall away from the end wall. The terminal passes through the end wall and insulated from the end wall. The electrode assembly is accommodated in the case and includes: a first tab, facing the opening; and a second tab, facing the end wall. The second tab is electrically connected with the terminal. The first current collector is disposed at an end of the electrode assembly facing the opening. The first current collector is connected with the first tab by welding. The cover assembly includes a first cover plate and a second cover plate. The first cover plate covers the opening and is connected with the sidewall by welding. The first cover plate is connected with the first current collector by welding. The first cover plate includes a through hole. The second cover plate is welded to the first cover plate and seals the through hole.

In an embodiment of the secondary battery according to the disclosure, the first current collector includes a cover plate weld part and a tab weld part, the cover plate weld part is connected with the first cover plate by welding, and the tab weld part is connected with the first tab by welding.

In an embodiment of the secondary battery according to the disclosure, along a height direction of the secondary battery, a projection of the through hole on the first current collector covers the tab weld part.

In an embodiment of the secondary battery according to the disclosure, the cover plate weld part is disposed between the first cover plate and the electrode assembly, and a side of the cover plate weld part away from the electrode assembly is connected with the first cover plate by welding.

In an embodiment of the secondary battery according to the disclosure, a surface on a side of the cover plate weld part away from the first cover plate includes an inner welding mark.

In an embodiment of the secondary battery according to the disclosure, a surface on a side of the first cover plate away from the cover plate weld part does not include a welding mark.

In an embodiment of the secondary battery according to the disclosure, a surface of the first cover plate away from the cover plate weld part includes an outer welding mark, and, along a height direction of the secondary battery, a projection area of the inner welding mark is greater than a projection area of the outer welding mark.

In an embodiment of the secondary battery according to the disclosure, the cover plate weld part is welded to an edge of the through hole, and the tab weld part is recessed toward a side of the electrode assembly with respect to the cover plate weld part, and is connected with the first tab by welding.

In an embodiment of the secondary battery according to the disclosure, the case is in a cylindrical shape, the first cover plate is in a ring shape, and the through hole is provided coaxially with the first cover plate.

In an embodiment of the secondary battery according to the disclosure, an outer diameter of the sidewall is set as D, the tab weld part is distributed within an annular region with an end surface center of the electrode assembly as a center, an inner circle diameter of the annular region is greater than or equal to 0.25 D, and an outer circle diameter of the annular region is less than or equal to 0.87 D.

In an embodiment of the secondary battery according to the disclosure, an inner circle diameter of the annular region is greater than or equal to 12 mm, and an outer circle diameter of the annular region is less than or equal to 40 mm.

In an embodiment of the secondary battery according to the disclosure, a diameter of the through hole is greater than or equal to 0.43 D and less than or equal to 0.96 D.

In an embodiment of the secondary battery according to the disclosure, an inner edge of the first cover plate includes a recessed part, the through hole is provided in the recessed part, and the second cover plate is at least partially accommodated in the recessed part.

In an embodiment of the secondary battery according to the disclosure, a bottom part of the recessed part includes a platform region, the platform region is disposed around the through hole, the second cover plate is installed to a side of the platform region away from the electrode assembly and is connected with the platform region by welding.

In an embodiment of the secondary battery according to the disclosure, a width of the platform region along a radial direction is 0.2 mm to 5 mm.

In an embodiment of the secondary battery according to the disclosure, a width of the platform region along a radial direction is 0.5 mm to 3 mm.

In an embodiment of the secondary battery according to the disclosure, a guide structure is disposed on the second cover plate and/or the recessed part.

In an embodiment of the secondary battery according to the disclosure, the guide structure includes one or a combination of multiple of the following: a rounded corner, a chamfered corner, or a ramp.

In an embodiment of the secondary battery according to the disclosure, the guide structure includes a first annular inclined surface, the first annular inclined surface surrounds the through hole and is reduced from a side of the first cover plate away from the electrode assembly toward a side of the electrode assembly, and an inclination angle of the first annular inclined surface is 95° to 160°.

In an embodiment of the secondary battery according to the disclosure, an explosion proof structure is disposed on the second cover plate.

In an embodiment of the secondary battery according to the disclosure, the explosion proof structure includes a notch provided on the second cover plate, and an opening of the notch is near the electrode assembly.

In an embodiment of the secondary battery according to the disclosure, the explosion proof structure includes a second welding mark between the first cover plate and the second cover plate.

In an embodiment of the secondary battery according to the disclosure, the first cover plate includes a convex part matching the opening, the convex part is convex toward a side of the electrode assembly and disposed around the through hole, an outer edge of the convex part is fit with the sidewall, and the convex part is configured to block laser at a time of welding the first cover plate and the opening.

In an embodiment of the secondary battery according to the disclosure, along a height direction of the secondary battery, a height of the convex part is 0.1 mm to 5 mm, and a radial width of the convex part is 1 mm to 10 mm.

In an embodiment of the secondary battery according to the disclosure, a height of the convex part is 0.5 mm to 2.5 mm.

In an embodiment of the secondary battery according to the disclosure, the first cover plate further includes a position limiting part disposed around the convex part, and an end surface of the sidewall abuts against the position limiting part.

In an embodiment of the secondary battery according to the disclosure, a first welding mark is disposed around the opening between the first cover plate and the opening, and the first welding mark is located on a contact surface of the position limiting part and the sidewall.

In an embodiment of the secondary battery according to the disclosure, the cover plate weld part is connected with a side of the convex part toward the electrode assembly by welding.

In an embodiment of the secondary battery according to the disclosure, the case is in a cylindrical shape, the electrode assembly includes a central through hole, a side of the convex part facing the electrode assembly is an annular surface, and the annular surface is disposed coaxially with the case.

In an embodiment of the secondary battery according to the disclosure, an aperture is provided in a middle part of the first current collector, and, along a height direction of the secondary battery, a projection of the central through hole on the first current collector is at least partially overlapped with the aperture.

In an embodiment of the secondary battery according to the disclosure, on a surface on a side of the first cover plate away from the electrode assembly, a concave recess corresponding to the convex part is formed, and a depth of the concave recess is 0.1 mm to 5 mm.

In an embodiment of the secondary battery according to the disclosure, a distance from an end surface where the first tab is located to an outer surface of the cover plate is 0.6 mm to 4 mm.

In an embodiment of the secondary battery according to the disclosure, the secondary battery further includes a solution injection hole and a blocking plate, the solution injection hole is provided on the terminal, and the blocking plate is welded to the terminal and seals the solution injection hole.

The disclosure further provides a battery pack including the secondary battery according to any of the above.

The disclosure further provides an electronic apparatus including the above battery pack.

In the secondary battery according to the disclosure, an outer edge of the first cover plate is connected with the sidewall by welding and seals the opening, and the first current collector is connected with the first cover plate by welding. There is no connection between the first current collector and the sidewall of the case, and it is possible to alleviate the connection failure due to the squeezing in an encapsulation process in the case where the first current collector is welded to the sidewall of the case. Meanwhile, in the disclosure, the secondary battery can be sealed and packaged without performing a roll-grooving process and a pier-sealing process on the case. Therefore, the processes are simplified, the assembling efficiency is facilitated, and the height of a roll groove can be saved. Therefore, the spatial usage of the secondary battery is facilitated.

In the disclosure, the first current collector and the first cover plate may be integrated by welding before the secondary battery is assembled. Then, the first current collector and the electrode assembly are welded through the through hole on the first cover plate. Therefore, the assembling processes are reduced. In addition, the first current collector and the first cover plate are welded before assembling. Laser may be irradiated from a side of the first current collector and travel to the first cover plate through the first current collector that is relatively thin. The welding process window is large, and the welding efficiency is high.

### BRIEF DESCRIPTION OF THE DRAWINGS

FIG. 1 is a schematic view illustrating an overall structure in an embodiment of a secondary battery according to the disclosure.
FIG. 2 is a partially enlarged view illustrating a region I in FIG. 1.
FIG. 3 is a partially enlarged view illustrating a region II in FIG. 2.
FIG. 4 is a partially enlarged view illustrating a region III in FIG. 3.
FIG. 5 is a cross-sectional view illustrating an embodiment of the secondary battery according to the disclosure after a first cover plate and a first current collector are welded.
FIG. 6 is a three-dimensional view illustrating an embodiment of the secondary battery according to the disclosure after the first cover plate and the first current collector are welded.
FIG. 7 is an exploded view illustrating an embodiment of the secondary battery according to the disclosure before the first cover plate and the first current collector are welded.
FIG. 8 is a three-dimensional view illustrating the first cover plate in an embodiment of the secondary battery according to the disclosure from another perspective.
FIG. 9 is a schematic view illustrating a connection between the first cover plate and the first current collector in another embodiment of the secondary battery according to the disclosure.
FIG. 10 is a schematic view illustrating a connection between the first cover plate and the first current collector in yet another embodiment of the secondary battery according to the disclosure.
FIG. 11 is a partially enlarged view illustrating the region II in FIG. 2 according to another embodiment of the disclosure.
FIG. 12 is a schematic three-dimensional view illustrating the secondary battery of the disclosure after a second cover plate is removed from a side of an opening of a case.
FIG. 13 is a schematic view illustrating a structure in which a solution injection hole is provided on a side of an end wall of the case in an embodiment of the secondary battery according to the disclosure.
FIG. 14 is a schematic view illustrating an electronic apparatus in an embodiment according to the disclosure.
FIG. 15 is a schematic view illustrating a battery pack in an embodiment according to the disclosure.

### REFERENCE SIGNS LIST

1: Electronic apparatus; 10: Battery pack; 11: Operation part; 101: Housing body; 102: Housing cover; 100: Secondary battery; 110: Case; 111: End wall; 112: Sidewall; 113: Opening; 120: Terminal; 121: Solution injection hole; 122: Blocking plate; 130: Electrode assembly; 131: Second tab; 132: First tab; 133: Central through hole; 134: Second current collector; 140: Cover plate assembly; 141: First cover plate; 1411: Through hole; 1412: Convex part; 1413: Position limiting part; 1414: Recessed part; 1415: First annular inclined surface; 1416: Platform region; 1417: Annular surface; 1418: Concave recess; 142: Cover plate; 1421: explosion proof structure; 1422: Cylindrical section; 1423: Second annular inclined surface; 143: First current collector; 1431: tab weld part; 1432: Cover plate weld part; 1433: Aperture; 1434: Annular region; 144: First welding mark; 145: Guide structure; 146: Gap; 1471: Inner welding mark; 1472: Outer welding mark; 148: Second welding mark; 149: Third welding mark.

### DESCRIPTION OF THE EMBODIMENTS

The implementation of the disclosure is illustrated below by specific embodiments. A person having ordinary skill in the art can easily understand other advantages and effects of the disclosure from the content disclosed in this specification. The disclosure may also be implemented or applied through other different detailed embodiments. Various details in the specification may be modified or changed in various ways based on different perspectives and applications without departing from the spirit of the disclosure. It should be noted that, as long as there is no conflict, the following embodiments and the features in the embodiments may be combined with each other. It should also be understood that the terminology used in the embodiments of the disclosure serves to describe specific embodiments, but shall not be construed as limiting the scope of the disclosure. Test methods without specifying specific conditions in the following embodiments generally follow conventional conditions or conditions recommended by the respective manufacturers.

When a numerical range is set in an embodiment, it should be understood that, unless otherwise stated in the disclosure, the two endpoints of each numerical range and any value between the two endpoints may be selected. Unless otherwise defined, all technical and scientific terms used in the disclosure are consistent with the understanding of the prior art by those skilled in the art and the description of the disclosure. The disclosure may also be implemented using any method, apparatus, and material in the prior art that are similar or equivalent to the methods, apparatus, and materials described in the embodiments of the disclosure.

It should be noted that terms such as "upper", "lower", "left", "right", "middle" and "one" recited in the specification are only for the ease of description and do not serve to limit the scope of this specification. Changes or adjustments to relative relationships, provided there is no substantive change in the technical contents, shall also be deemed to fall within the scope of the disclosure.

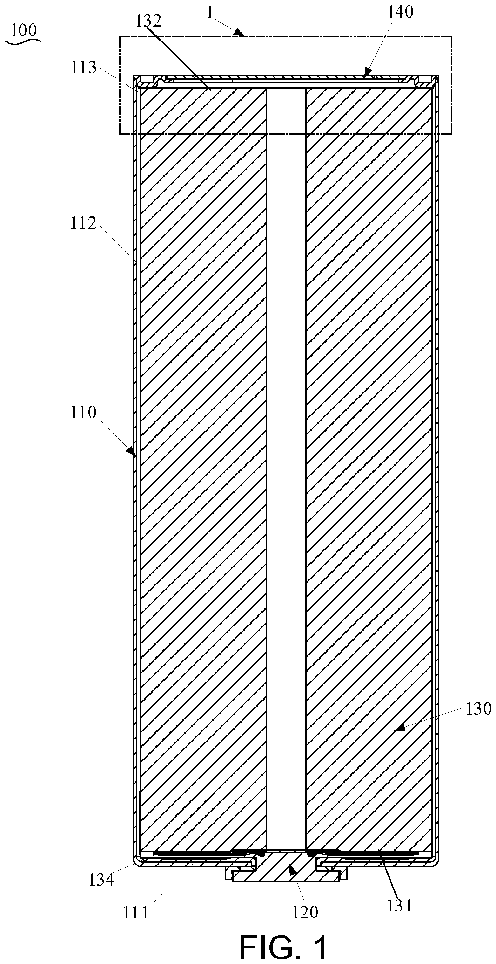

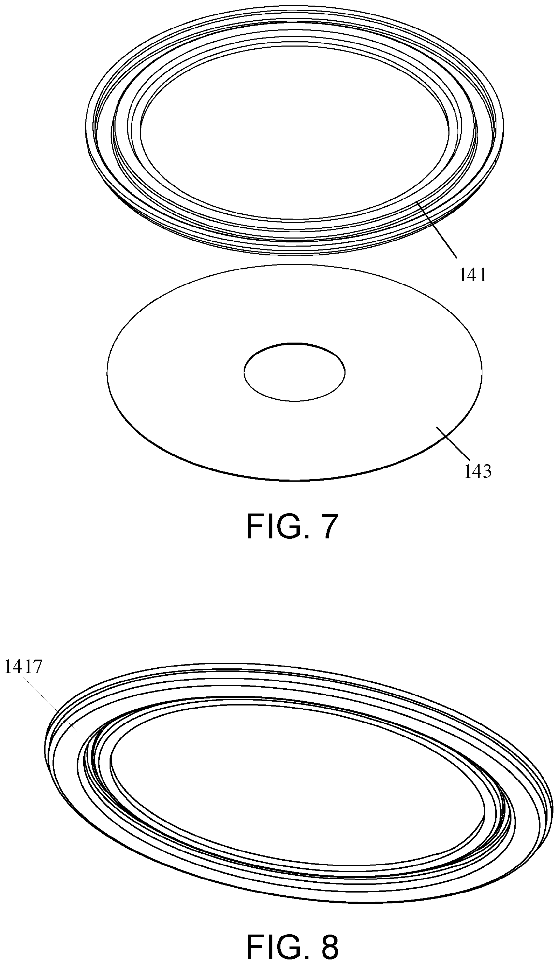

Referring to FIGs. 1 to 15, the disclosure provides a secondary battery 100, a battery pack 10 including the secondary battery 100, and an electronic apparatus 1. In the secondary battery 100, there is no connection between a first current collector 143 and a sidewall 112 of a case 110, and it is possible to alleviate the connection failure due to squeezing received in an encapsulation process in the case where the first current collector 143 is welded to the sidewall 112 of the case 110.

Referring to FIG. 1, the secondary battery 100 according to the disclosure includes: the case 110, a terminal 120, an electrode assembly 130, the first current collector 143, and a cover plate assembly 140.

Referring to FIG. 1, the case 110 includes an end wall 111 and the sidewall 112 surrounding the end wall 111. The connection between the end wall 111 and the sidewall 112 may be realized through various ways, such as integral press molding, integral forge molding, or split welding, as long as stable sealing and electrical connection relationships can be formed. How the sidewall 112 surrounds is not particularly limited. The sidewall 112 may surround to form a cylindrical shape or any enclosed annular profile matching the end wall 111. In the embodiment, the outer edge of the end wall 111 is circular, and the sidewall 112 forms a cylindrical shape surrounding the outer edge of the end wall 111. In addition, a circular opening 113 is formed at an end of the sidewall 112 away from the end wall 111. An accommodation chamber is formed in the case 110 defined by the end wall 111 and the sidewall 112. The accommodation chamber is configured to accommodate the electrode assembly 130, an electrolytic solution (not shown), and other components as needed for the battery. Specifically, the diameter of the case 110 may be determined in accordance with the specific size of the electrode assembly 130, and may be, for example, 18 mm, 21 mm, 46 mm, etc. Various materials may be adopted as the material of the case 110, such as copper, iron, aluminum, steel, aluminum alloy. In order to prevent the case 110 from rusting through long term use, the surface of the case 110 may also be coated with a layer of a rust resistant material such as metal nickel.

Referring to FIG. 1, the electrode assembly 130 is accommodated in the case 110, and is a component where electrochemical reaction occurs in the secondary battery 100. One or more electrode assemblies 130 may be provided in the case 110. The electrode assembly 130 is mainly formed through rolling or stacking positive and negative electrode pieces. In addition, it is common to provide a separator between the positive and negative electrode pieces. The positive electrode piece includes a positive electrode current collector and a positive electrode active material. The positive active material is coated on the surface of the positive electrode current collector. The positive electrode current collector includes a coated region coated with the active material and an uncoated region without coating of the active material. A positive tab of the electrode assembly is formed by rolling the uncoated region. The negative electrode piece includes a negative electrode current collector and a negative electrode active material. The negative active material is coated on the surface of the negative electrode current collector. The negative electrode current collector includes a coated region coated with the active material and an uncoated region without coating of the active material. A negative tab of the electrode assembly is formed by rolling the uncoated region. In a lithium ion secondary battery, for example, the material of the positive electrode current collector may be aluminum, a positive electrode active material layer includes the positive electrode active material, and the positive electrode active material may be lithium cobalt oxide, lithium iron phosphate, ternary lithium or lithium manganate, etc. The material of the negative electrode current collector may be copper, a negative electrode active material layer includes the negative electrode active material, and the negative electrode active material may be carbon or silicon, etc. The material of the separator may be polypropylene (PP) or polyethylene (PE), etc. In order to protect and insulate a cell, the cell may be externally covered by an insulation film. The insulation film may be obtained by synthesizing PP, PE, PET, PVC, or other polymer materials. The electrode assembly 130 of the disclosure includes a first tab 132 facing the opening 113 and a second tab 131 facing the end wall 111. The second tab 131 may be a positive tab or a negative tab. The first tab 132 and the second tab 131 have opposite electrical properties. In the embodiment, the second tab 131 is a positive tab, the terminal 120 is electrically connected with the second tab 131 and positively charged. The first tab 132 is a negative tab, and the case 110 is electrically connected with the first tab 132 on the side of the opening 113 opposite to the end wall 111 and therefore negatively charged. However, in other embodiments, it may also be that the second tab 131 is a negative tab, and the first tab 132 is a positive tab. The second tab 131 is electrically connected with the terminal 120 via a second current collector 134. The first current collector 143 is disposed at an end of the electrode assembly 130 facing the opening 113, and is connected with the first tab 132 by welding.

Referring to FIG. 1, the terminal 120 passes through the end wall 111 and is insulated from the end wall 111. The structural form of the terminal 120 may be configured in any form as appropriate, as long as the terminal 120 passes through the end wall 111 and is electrically connected with the second tab 131 of the electrode assembly 130. For example, the cross-section may be circular, rectangular, prismatic, or have an irregular contour able to conduct power stably. An end of the terminal 120 facing the electrode assembly 130 passes through the end wall 111 and is electrically connected to the second tab 131 directly or indirectly through transfer. In the embodiment, the terminal 120 is electrically connected with the second tab 131 through transfer via the second current collector 134. An end of the terminal 120 facing the opening 113 is connected with the second current collector 134 by welding. A side of the second current collector 134 away from the terminal 120 is connected with the second tab 131 by welding. An end of the terminal 120 away from the electrode assembly 130 is exposed to the outside of the case 110 to form a corresponding electrode. The electrical property of the terminal 120 may be positive or negative. For example, in an embodiment, the second tab 131 is a negative tab, so the terminal 120 is the negative electrode, and the case 110 forms the corresponding positive electrode. In the embodiment, the second tab 131 is a positive tab, so the terminal 120 is the positive electrode, and the case forms the corresponding negative electrode. A terminal installation hole is provided on the end wall 111. The terminal 120 passes through and is installed in the terminal installation hole while being sealed and insulated. With the structure of the case 110, the installation efficiency is facilitated, and the assembling and sealing properties are favorable over a case 110 in a form with openings 113 on both ends. The terminal 120 is manufactured by using a conductive metal material. The material of the terminal 120 is aluminum (Al), for example. With the material of the terminal 120 being aluminum, a riveting process can be carried out easily. In the embodiment, the material of the terminal is aluminum, and the terminal is the positive electrode. In correspondence with the terminal, the material of the case is low carbon steel and forms the negative electrode correspondingly. The terminal 120 is electrically insulated from the case 110. Various ways may be adopted to electrically insulate the terminal 120 and the end wall 111 of the case 110 from each other. For example, an insulation washer may be disposed between the terminal 120 and the end wall 111 to realize insulation. Alternatively, an insulation coating layer may be formed on a portion of the terminal 120 to realize insulation. Alternatively, some of the means may be adopted and applied in combination.

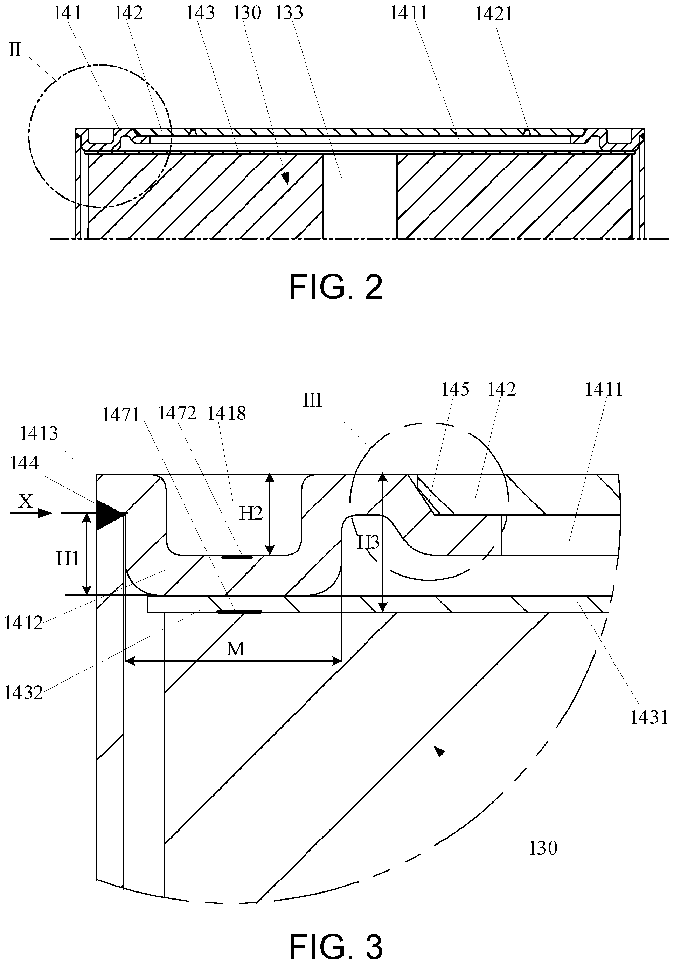

Referring to FIGs. 1 and 2, in the disclosure, the materials of the first current collector 143 and the second current collector 134 are chosen depending on the electrode polarities of the tabs to which the first current collector 143 and the second current collector 134 are connected. For example, if the second current collector 134 is connected with the positive tab, aluminum metal may be chosen for the second current collector 134. In such case, differing from the second current collector 134, the first current collector 143 is connected with the negative tab, and copper metal may be chosen as the material of the first current collector 143. If the second current collector 134 is connected with the negative tab, copper metal may be chosen for the second current collector 134. In such case, differing from the second current collector 134, the first current collector 143 is connected with the positive tab, and aluminum metal may be chosen as the first current collector 143. The shapes and structures of the second current collector 134 and the first current collector 143 are not particularly limited, either, and may be chosen as appropriate to realize stable and reliable electrical connection.

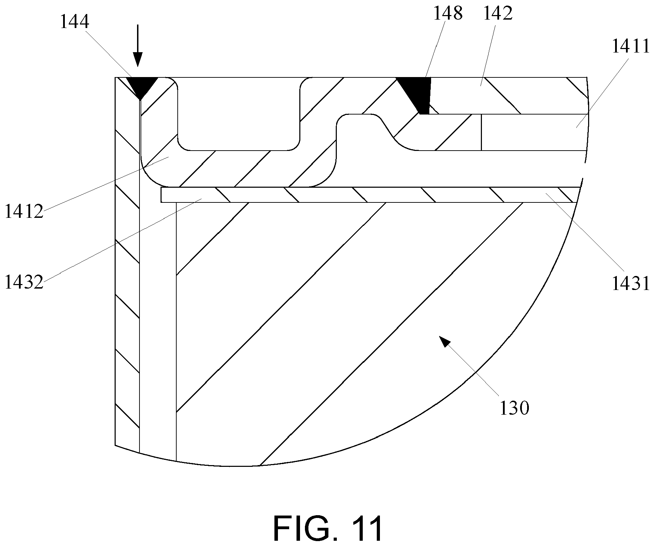

Referring to FIGs. 1, 2, and 3, the cover plate assembly 140 seals and blocks the opening 113. The cover plate assembly 140 includes a first cover plate 141 and a second cover plate 142. The shape of the outer edge of the first cover plate 141 corresponds to the shape of the opening 113. The outer edge of the first cover plate 141 is connected with the sidewall 112 by welding and seals the opening 113. The outer edge of the first cover plate 141 and the sidewall 112 may be welded in a way that seals the welded position. For example, the weld head may perform welding in a direction perpendicular to the sidewall 112 (i.e., X direction in FIG. 3) and move with respect to the secondary battery 110 in the circumferential direction during the welding process, so as to form an annular first welding mark 144 on the sidewall 112. Alternatively, as shown in FIG. 11, the weld head may perform welding along the height direction of the secondary battery 100 (i.e., the direction from the opening 113 to the end wall 111) and rotate relative to the secondary battery 100 along the circumferential direction of the first cover plate 141 during the welding process, so as to form the first welding mark 144 in an enclosed annular shape at a position where the outer edge of the first cover plate 141 and the end surface of the sidewall 112 contact each other. It should be noted that the shape of the first welding mark 144 in FIG. 3 and the shape of the first welding mark 144 in FIG. 11 are both shown for an illustrative purpose, and shall not be construed as limitations on the shape of the first welding mark 144. The first cover plate 141 includes a through hole 1411. The shape of the through hole 1411 is not particularly limited, but may exhibit, for example, a circular shape, an elliptical shape, etc., having an enclosed profile. The through hole 1411 penetrates through the first cover plate 141 along the thickness direction of the first cover plate 141. The first cover plate 141 and the first current collector 143 are connected by welding. The position where the first cover plate 141 and the first current collector 143 are welded and the shape of the welding mark are not particularly limited, as long as stable conductive connection between the first cover plate 141 and the first current collector 143 can be realized. The second cover plate 142 is fixed to the first cover plate 141 and seals and covers the through hole 1411. Various ways may be adopted for the second cover plate 142 to seal and cover the through hole 1411, as long as the through hole 1411 can be effectively sealed and blocked. For example, the second cover plate 142 may be welded to the first cover plate 141 to seal and block the through hole 1411. The shape of the second cover plate 142 may correspond to the through hole 1411. For example, the second cover plate 142 may be circular when the through hole 1411 is circular, and the second cover plate 142 may be square when the through hole 1411 is square. It may also be that the shape of the second cover plate 142 does not correspond to the shape of the through hole 1411. For example, when the through hole 1411 is circular, the second cover plate 142 may be in a square shape able to cover the through hole 1411, and when the through hole 1411 is square, the second cover plate 142 may be in a circular shape able to cover the through hole 1411. It should be noted that, if a solution injection hole or an explosion proof structure is provided on the second cover plate 142, the solution injection hole and the explosion proof structure both need to be provided within the range of the projection of the through hole 1411 in the height direction of the secondary battery 100.

In the secondary battery 100 according to the disclosure, no connection is required between the first current collector 143 and the sidewall 112 of the case 110, and it is possible to alleviate the connection failure in the conventional art due to squeezing in an encapsulation process in the case where the first current collector 143 is welded to the sidewall 112 of the case 110. In addition, according to the secondary battery 100 of the disclosure, the secondary battery 100 can be sealed and packaged without performing a roll-grooving process and a pier-sealing process. Therefore, the processes are simplified, the assembling efficiency is facilitated, and the height of a roll groove can be saved. Therefore, in terms of height, the spatial usage of the secondary battery 100 is facilitated.

In the secondary battery 100 of the disclosure, after the electrode assembly 130 is installed into the case 110, the assembling processes on a side of the opening 113 include:

S1: Weld and integrate the first current collector 143 and the first cover plate 141 in advance;

S2: Seal and cover the opening 113 with the first cover plate 141 and connect the first cover plate 141 with the sidewall 112 by welding;

S3: Connect the first current collector 143 and the first tab 132 by welding through the through hole 1411 of the first cover plate 141;

S4: Weld the second cover plate 142 to the first cover plate 141 and seal the through hole 1411.

According to the assembling processes, the first current collector 143 and the first cover plate 141 may be integrated by welding before the secondary battery is assembled. Then, the first current collector 143 is welded to the first tab 132 of the electrode assembly 130 through the through hole on the first cover plate 141. As a result, the assembling processes after the electrode assembly 130 is installed into the case 110 are reduced. In addition, with the first current collector 143 and the first cover plate 141 being welded before assembling, laser may be irradiated from a side of the first current collector 143, penetrate through the relatively thinner first current collector 143, and travel to the first cover plate 141, thereby providing a greater welding process window and facilitating welding efficiency.

Referring to FIGs. 1 and 3, in an embodiment of the secondary battery 100 according to the disclosure, the first current collector 143 includes a cover plate weld part 1432 and a tab weld part 1431. The shape of the cover plate weld part 1432, the shape of the tab weld part 1431, and the relative positions between the cover plate weld part 1432 and the tab weld part 1431 are not particularly limited. In the embodiment, along the height direction of the secondary battery 100, the projection of the cover plate weld part 1432 is in a ring shape, and the projection of the tab weld part 1431 is distributed inside of the projection of the cover plate weld part 1432. The cover plate weld part 1432 is connected with the first cover plate 141 by welding, and the tab weld part 1431 is connected with the first tab 132 by welding.

In the embodiment, the secondary battery 100 is a cylindrical secondary battery 100. The sidewall 112 of the case 110 is formed into a cylindrical shape. Along the height direction of the secondary battery 100 (i.e., the axial direction of the cylinder), the projection of the through hole 1411 on the first current collector 143 covers the tab weld part 1431. With such arrangement, after the welding of the first cover plate 141 and the sidewall 112 is completed, a side of the tab weld part 1431 away from the electrode assembly 130 is exposed inside the through hole 1411, and the tab weld part 1431 and the first tab 132 may be welded through the through hole 1411 from the outer side of the first cover plate 141. Meanwhile, when such arrangement is adopted, the projection of the through hole 1411 covers the tab weld part 1431. Therefore, the through hole 1411 is greater in size. Thus, it is possible to inject an electrolytic solution into the case 110 through the through hole 1411 at the same time. The solution injection efficiency can be facilitated, and no additional solution injection hole needs to be provided.

Referring to FIGs. 2 and 3, there may be multiple arrangements of relative positions among the cover plate weld part 1432, the electrode assembly 130, and the first cover plate 141 in the height direction of the secondary battery 100 according to the disclosure. In an embodiment of the secondary battery 100 according to the disclosure, along the height direction of the secondary battery 100, the cover plate weld part 1432 is disposed between the first cover plate 141 and the electrode assembly 130, and a side of the cover plate weld part 1432 away from the electrode assembly 130 is connected with the first cover plate 141 by welding. In this way, when the pre-integration of the first cover plate 141 and the second current collector 134 (i.e., integrating the first current collector 143 and the first cover plate 141 in advance by welding before the secondary battery is assembled) is realized, the cover plate weld part 1432 and the first cover plate 141 may be welded from the side of the electrode assembly 130. Since the wall thickness of the second current collector 134 is smaller than that of the first cover plate 141, the welding process window can be increased.

In an embodiment of the secondary battery 100 according to the disclosure, a surface on a side of the cover plate weld part 1432 away from the first cover plate 141 includes an inner welding mark 1471. The inner welding mark 1471 is formed by performing welding from the side of the cover plate weld part 1432 toward the side of the first cover plate 141. In an embodiment of the secondary battery according to the disclosure, since the energy adopted at the time of welding is appropriate, the molten pool does not penetrate through the first cover plate 141 at the time of welding from the side of the cover plate weld part 1432 toward the side of the first cover plate 141. Therefore, there is no welding mark on the surface on a side of the first cover plate 141 away from the cover plate weld part 1432. However, considering a narrower process window in the conventional welding technique, in another embodiment, the surface on a side of the cover plate weld part 1432 away from the first cover plate 141 includes the inner welding mark 1471. The surface of the first cover plate 141 away from the cover plate weld part 1432 includes an outer welding mark 1472. Since welding is performed from a side of the cover plate weld part 1432 toward the side of the first cover plate 141, along the height direction of the secondary battery, the projection area of the inner welding mark 1471 is greater than the projection area of the outer welding mark 1472.

The type of the welding mark is not particularly limited. In an embodiment, the inner welding mark 1471 includes multiple discrete welding marks having an annular shape and distributed at intervals along the edge of the cover plate weld part 1432. In another embodiment, the inner welding mark 1472 includes a linear welding mark. The linear welding mark is continuously or intermittently distributed along the edge of the first cover plate 141.

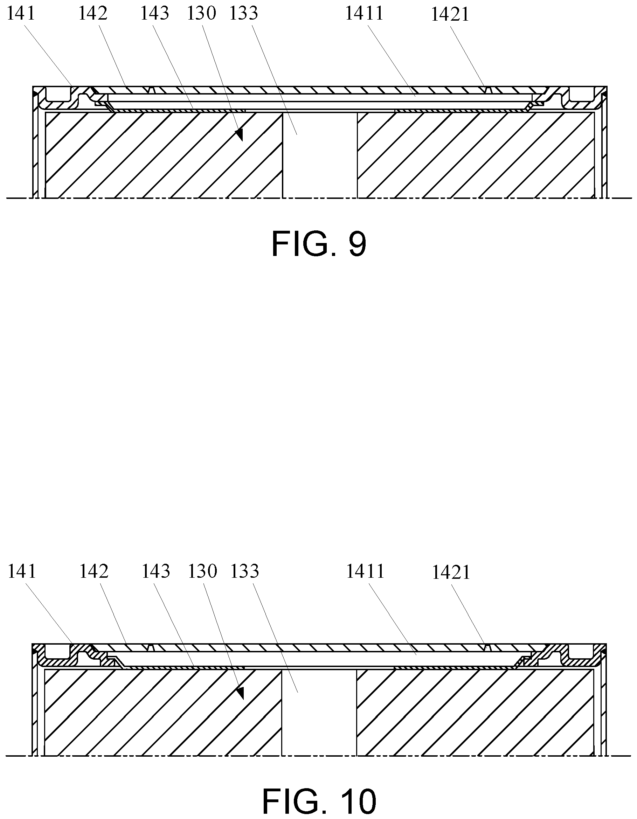

Referring to FIGs. 9 and 10, in an embodiment of the secondary battery 100 according to the disclosure, the cover plate weld part 1432 is welded to an edge of the through hole 1411, such as an edge on a side facing the electrode assembly 130 or an edge on a side away from the electrode assembly 130. The tab weld part 1431 is recessed toward the side of the electrode assembly 130 with respect to the cover plate weld part 1432, abuts against the first tab 132, and is connected and fixed by welding. When such arrangement is adopted, the size of the first current collector 143 can be reduced, and the weight of the battery can be reduced. Meanwhile, a smooth communication relationship can be maintained among the respective layers of the electrode assembly 130, which facilitates the injection of the electrolytic solution and the ventilation among the respective layers.

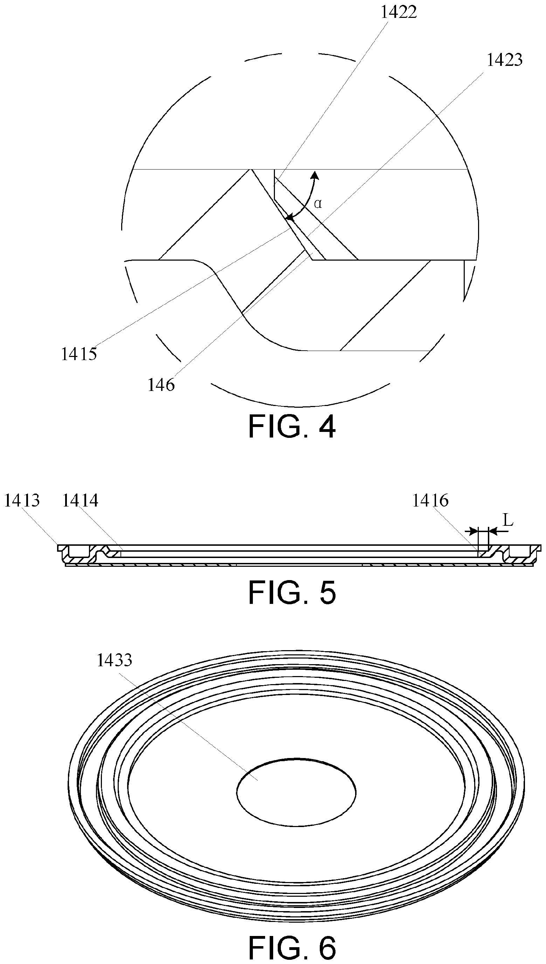

Referring to FIGs. 2 and 6, in an embodiment of the secondary battery 100 according to the disclosure, the case 110 is in a cylindrical shape, the first cover plate 141 is in a ring shape, the first current collector 143 is in a ring shape, an aperture 1433 is formed on the inner side of the ring shape, the through hole 1411 is provided coaxially with the first cover plate 141, the first current collector 143 is also disposed coaxially with the through hole 1411, the surface of the first current collector 143 exposed in the through hole 1411 is a ring-shaped planar region disposed around the aperture 1433, and the tab weld part 1431 is distributed within the ring-shaped planar region. With the first cover plate 141 being ring-shaped, when the first cover plate 141 is welded to the case 110, the thermal deformation of the edge of the through hole 1411 may be more uniform. In addition, with the tab weld part 1431 being distributed in the ring-shaped planar region disposed coaxially with the through hole 1411, the positioning for welding can be carried out more smoothly comparing to structures providing a hole, a protrusion, a groove, etc., in the region where the tab weld part 1431 is located.

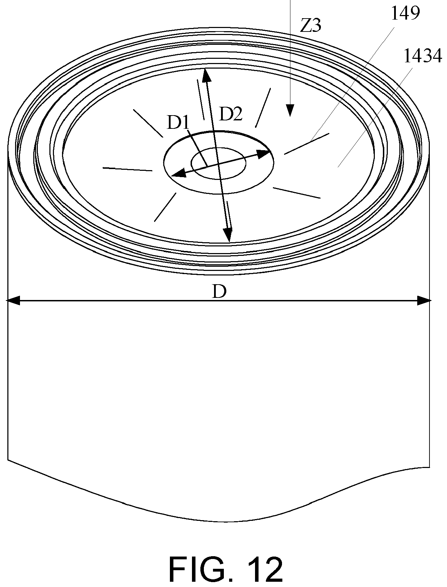

Referring to FIGs. 2 and 12, in an embodiment of the disclosure, the outer diameter of the sidewall is set as D, the tab weld part 1431 is distributed within an annular region 1434 with the end surface center of the electrode assembly 130 as the center, an inner circle diameter D1 of the annular region 1434 is greater than or equal to 0.25 D, and an outer circle diameter D2 of the annular region 1434 is less than or equal to 0.87 D. Considering the specification of the conventional secondary battery, the inner circle diameter D1 of the annular region 1434 may be greater than or equal to 12 mm, and the outer circle diameter D2 of the annular region 1434 may be less than or equal to 40 mm. In this way, the first current collector 143 and the first tab 132 may be welded through the through hole 1411 before the second cover plate 142 is installed. When the first current collector 143 and the first tab 132 are welded in this way, a welding seam, such as a third welding seam 149 in FIG. 12, is formed on the surface of the first current collector 143 inside the through hole 1411. It should be noted that the third welding seam 149 is merely shown for schematically illustrating the welding seam between the first current collector 143 and the first tab 131, and shall not be construed as a limitation on the shape of the welding seam. Other forms of welding seams, which are not exhaustively listed herein, may also be chosen as appropriate. Considering the specification of the conventional cylindrical secondary battery, the tab weld part 1431 may be distributed within the annular region with a diameter of 12 mm to 40 mm, and the annular region 1434 is disposed coaxially with the through hole 1411. In the annular region 1434, the tab of the electrode assembly 130 is relatively thick and uniform, thereby allowing stable welding between the tab weld part 1431 and the first tab 132 and reducing the thermal impact on the electrode assembly 130 due to welding heat.

In an embodiment of the secondary battery 100 according to the disclosure, considering the tab distribution in the electrode assembly 130, the diameter of the through hole 1411 may be greater than or equal to 0.43 D and less than or equal to 0.96 D. With such range, the majority of the tab weld part 1431 can be covered, and the diameter of the through hole 1411 can be greater, which helps inject the electrolytic solution.

Referring to FIGs. 3 and 5, in an embodiment of the secondary battery 100 according to the disclosure, an inner edge of the first cover plate 141 includes a recessed part 1414. The shape of the recessed part 1414 may correspond to the second cover plate 142. For example, when the outer profile of the second cover plate 142 is circular, the projection of the outer profile of the recessed part 1414 is also circular. It may also be that the shape of the recessed part 1414 does not correspond to the second cover plate 142. For example, when the outer profile of the second cover plate 142 is circular, the profile of the recessed part 1414 is in a square shape able to accommodate the second cover plate 142. The depth of the recessed part 1414 is to an extent that, in the height direction, at least partially accommodates the second cover plate 142. The through hole 1411 is disposed in the recessed part 1414. The second cover plate 142 is at least partially accommodated in the recessed part 1414 in the height direction. A plate surface on a side of the second cover plate 142 away from the electrode assembly 130 is recessed into the recessed part 1414 or flush with the outer surface of the first cover plate 141 to prevent the overall height of the secondary battery from increasing.

Referring to FIGs. 1, 3, and 5, in an embodiment of the secondary battery 100 according to the disclosure, the bottom part of the recessed part 1414 includes a platform region 1416. The platform region 1416 is integrally connected with the sidewall of the recessed part 1414. The platform region 1416 is disposed around the through hole 1411. The second cover plate 142 is installed to a side of the platform region 1416 away from the electrode assembly 130, and is sealed and connected with the platform region 1416 of the recessed part 1414 by welding. It should be noted that the second cover plate 142 may also be sealed with the sidewall of the recessed part 1414 as well as the platform region 1416 by welding. In an embodiment of the secondary battery 100 according to the disclosure, a width L of the platform region 1416 along the radial direction of the secondary battery 100 is 0.2 mm to 5 mm. With such width range, the second cover plate 142 and the platform region 1416 may have a relatively stable fitting relationship. In an embodiment of the secondary battery 100 according to the disclosure, the width L of the platform region along the radial direction may be 0.5 mm to 3 mm. With such range, the fitting may be relatively stable, and the weight may be relatively low.

Referring to FIGs. 3, 4, and 11, in an embodiment of the secondary battery 100 according to the disclosure, a guide structure 145 is provided on the second cover plate 142 and/or the recessed part 1414. The guide structure 145 may be provided solely on the second cover plate 142 or the recessed part 1414, and may also be provided on both of the second cover plate 142 and the recessed part 1414. The guide structure 145 includes one or a combination of multiple of the following: a rounded corner, a chamfered corner, or a ramp. In the embodiment, the guide structure 145 includes a first annular inclined surface 1415. The first annular inclined surface 1415 is a portion of a conical surface. The first annular inclined surface 1415 surrounds the through hole 1411 and is reduced from a side of the first cover plate 141 away from the electrode assembly 130 toward the side of the electrode assembly 130. An inclination angle α of the first annular inclined surface 1415 is 95° to 160°, so as to secure fast fitting and welding between the second cover plate 142 and the platform region 1416 of the recessed part 1414. In the embodiment, the guide structure 145 further includes a second annular inclined surface 1423 provided on the sidewall of the second cover plate 142. The second annular inclined surface 1423 is a portion of a conical surface. The second annular inclined surface 1423 surrounds the outer edge of the second cover plate 142 and is reduced from a side of the first cover plate 141 away from the electrode assembly 130 toward the side of the electrode assembly 130. The first annular inclined surface 1415 and the second annular inclined surface 1423 are disposed coaxially, and a gap 146 is formed between the first annular inclined surface 1415 and the second annular inclined surface 1423. A cylindrical section 1422 is disposed on a side of the second cover plate 142 away from the electrode assembly 130. The cylindrical section 1422 is connected with a side of the second annular inclined surface 1423 away from the electrode assembly 130. With such arrangement, when the second cover plate 142 and the first cover plate 141 are welded, the edge of the second cover plate 142 above the gap 146 is easily melt quickly, and the molten metal substance may quickly flow into the gap 146. Thus, the second welding mark 148 between the second cover plate 142 and the first cover plate 141 exhibits higher strength and sealing property. Nevertheless, while the position of the second welding mark 148 is shown in FIG. 11, the shape of the second welding mark 148 in the figure merely serves for an illustrative purpose, and shall not be construed as a limitation on the shape of the welding mark. Other forms of welding marks, which are not exhaustively listed herein, may also be chosen as appropriate,

Referring to FIGs. 1 and 2, in an embodiment of the secondary battery 100 according to the disclosure, an explosion proof structure 1421 is disposed on the second cover plate 142. The explosion proof structure 1421 is configured to be at least partially opened when the air pressure inside the case 110 reaches a predetermined level, so as to release the pressure inside the case 110. The type of the explosion proof structure 1421 is not particularly limited. For example, the explosion proof structure 1421 may be an explosion proof valve assembly installed onto the second cover plate 142. In an embodiment of the secondary battery 100 according to the disclosure, the explosion proof structure 1421 includes a notch provided on the second cover plate 142, and the notch has an annular structure. It should be noted that, the annular structure does not specifically define that the notch is in a circular annular shape or an elliptical annular shape. In the disclosure, it qualifies as an annular structure as long as the beginning and the end of the notch are connected. Of course, in other embodiments, it may also be that the beginning and the end of the notch are not connected, as long as the explosion proof structure can be opened when the pressure is greater than the set threshold. For example, the notch may have a non-annular profile, such as a C shape or a cruciform shape. With such arrangement, the notch is equivalent to an explosion proof valve disc, and the position where the notch is provided is a region with lower strength in the second cover plate 142. When the air pressure inside the case 110 exceeds a threshold (a threshold at which the structure is at least partially opened may be calculated in accordance with the strength at the location of the notch), the air pressure inside the case 110 may be released via a broken part, so as to prevent the secondary battery from exploding at the case and thus triggering module-level thermal runaway. Considering that the notch may damage the nickel coating layer on the surface of the second cover plate 142 and such damage may easily result in rusting at the position of the notch, the opening of the notch may be provided on a side of the second cover plate 142 facing the electrode assembly 130. In this way, the notch is located in the enclosed space inside the case 110, so the contact of the notch with air is decreased, the degree of rusting of the notch may be alleviated, and the service time of the notch may be increased.

Although providing a notch on the second cover plate 142 has an explosion proof effect, no notch is provided on the plate body of the second cover plate 142 in another embodiment of the secondary battery 100 according to the disclosure shown in FIG. 11. As shown in FIG. 11, the explosion proof structure 1421 is the second welding mark 148 between the first cover plate 141 and the second cover plate 142. When the air pressure inside the case 110 exceeds the strength of the second welding mark 148 between the first cover plate 141 and the second cover plate 142, the second welding mark 148 between the first cover plate 141 and the second cover plate 142 is broken, and the pressure is released. By doing so, an explosion proof effect is also exerted. Of course, it is also possible to arrange two weak positions, i.e., the notch and the second welding mark 148, as a double-guarantee for the explosion proof assembly to release pressure.

Referring to FIGs. 2 to 3, in an embodiment of the secondary battery 100 according to the disclosure, the first cover plate 141 includes a convex part 1412 matching the opening 113. The convex part 1412 is convex toward the side of the electrode assembly 130. The outer edge of the convex part 1412 matches the sidewall 112. The convex part 1412 is configured to guide the assembling of the first cover plate 141 and the opening 113 as well as the fitting between the sidewall 112 of the case 110 and the first cover plate 141, so that the first cover plate 141 and the opening 113 can be quickly positioned along the circumferential direction, thereby facilitating welding efficiency and radial position accuracy for welding. The convex part 1412 may be disposed integrally and continuously around the through hole 1411. Alternatively, it may also be that multiple independent convex parts 1412 are disposed around the through hole 1411. In an embodiment, the convex part 1412 may be disposed continuously around the through hole 1411, and the convex part 1412 may be configured to block laser at the time of welding the first cover plate 141 and the opening 113. The connection between the convex part 1412 and the first cover plate 141 is not particularly limited. The connection may be formed by integral press molding. Alternatively, the convex part 1412 may also be obtained by removing materials from the first cover plate 141 by machining. In an embodiment of the secondary battery 100 according to the disclosure, the convex part 1412 is obtained by pressing, and, along the height direction of the secondary battery 100, a height H1 of the convex part 1412 is 0.1 mm to 5 mm, and a radial width M of the convex part 1412 is 1 mm to 10 mm. The height H1 of the convex part 1412 may also be 0.5 mm to 2.5 mm. When the height H1 falls within the range, a stable fitting relationship can be attained, and weight can be reduced. On the surface on a side of the first cover plate 141 away from the electrode assembly 130, a concave recess 1418 corresponding to the convex part 1412 is formed. A depth H2 of the concave recess 1418 is 0.1 mm to 5 mm.

Referring to FIGs. 2 and 3, in an embodiment of the secondary battery 100 according to the disclosure, the first cover plate 141 further includes a position limiting part 1413 disposed around the convex part 1412. An end surface of the opening 113 abuts against the position limiting part 1413. The first welding mark 144 between the first cover plate 141 and the opening 113 is disposed around the opening 113, and is located on a surface where the position limiting part 1413 and the end surface contact. By disposing the position limiting part 1413, the first cover plate 141 and the case 110 can be positioned axially, and the air tightness of the first welding mark 144 between the first cover plate 141 and the sidewall 112 of the case 110 can be facilitated.

Referring to FIGs. 1 and 5 to 8, in an embodiment of the secondary battery 100 according to the disclosure, the case 110 is cylindrical, an annular surface 1417 is provided on a side of the convex part 1412 facing the electrode assembly 130, the annular surface 1417 is provided coaxially with the first cover plate 141 and the case 110, the cover plate weld part 1432 is connected with a side of the annular surface facing the electrode assembly 130 by welding, the electrode assembly 130 includes a central through hole 133, the aperture 1433 is provided in the middle part of the first current collector 143, and, along the height direction of the secondary battery 100, the projection of the central through hole 133 on the first current collector 143 is at least partially overlapped with the aperture 1433. With such arrangement, the chambers at the two ends of the electrode assembly 130 can communicate with each other smoothly through the central through hole 133.

Referring to FIG. 3, in an embodiment of the secondary battery 100 according to the disclosure, a distance H3 from the end surface where the first tab 132 is located to a cover plate outer surface is 0.6 mm to 4 mm. Accordingly, with the structure of the disclosure, a favorable spatial usage of the secondary battery 100 along the height direction can be realized. As a result, the energy density of the secondary battery 100 can be facilitated.

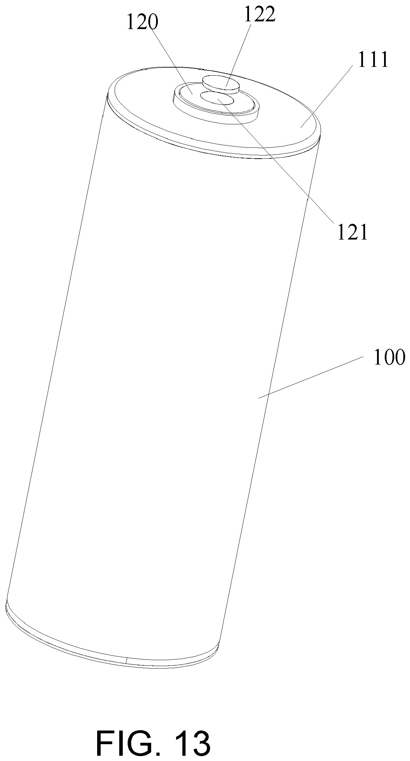

According to the secondary battery of the disclosure, an electrolytic solution may be injected into the secondary battery 100 via the through hole 1411. However, it should be noted that a solution injection hole 121 may be additionally provided to inject the electrolytic solution. The secondary battery 100 according to the disclosure may further include the solution injection hole 121 and a blocking plate 122 that seals and blocks the solution injection hole 121. The solution injection hole 122 may be provided on the end wall 111 of the case 110, and may also be disposed on the terminal 120. For example, referring to FIG. 13, in an embodiment of the disclosure, the solution injection hole 121 is provided on the terminal 120, and the blocking plate 122 is welded to the terminal 120 and blocks the solution injection hole 121 after the electrolytic solution is injected. Compared with the case where the solution is injected via the through hole 1411, the solution may be injected after the second cover plate 142 is welded to the first cover plate 141 if the solution injection hole 121 is provided on the terminal 120. Therefore, it is possible to address the issue that a welding trace of the second cover plate 142 and the first cover plate 141 is long after the solution is injected via the through hole 1411, and the impact of welding heat may result in electrolyte decomposition. Moreover, when the solution injection hole 121 of the terminal 120 is encapsulated, since the welding position is distant from the electrode assembly 130, the thermal impact is small. It should be noted that, in an embodiment of the disclosure, the terminal 120 is positively charged and serves as the positive electrode end of the secondary battery 100, and the case 110 as a whole is negatively charged and serves as the negative electrode end of the secondary battery 100. In other embodiments, it may also be that the terminal 120 is negatively charged and serves as the negative electrode end of the secondary battery 100, and the case 110 as a whole is positively charged and serves as the positive electrode end of the secondary battery 100.

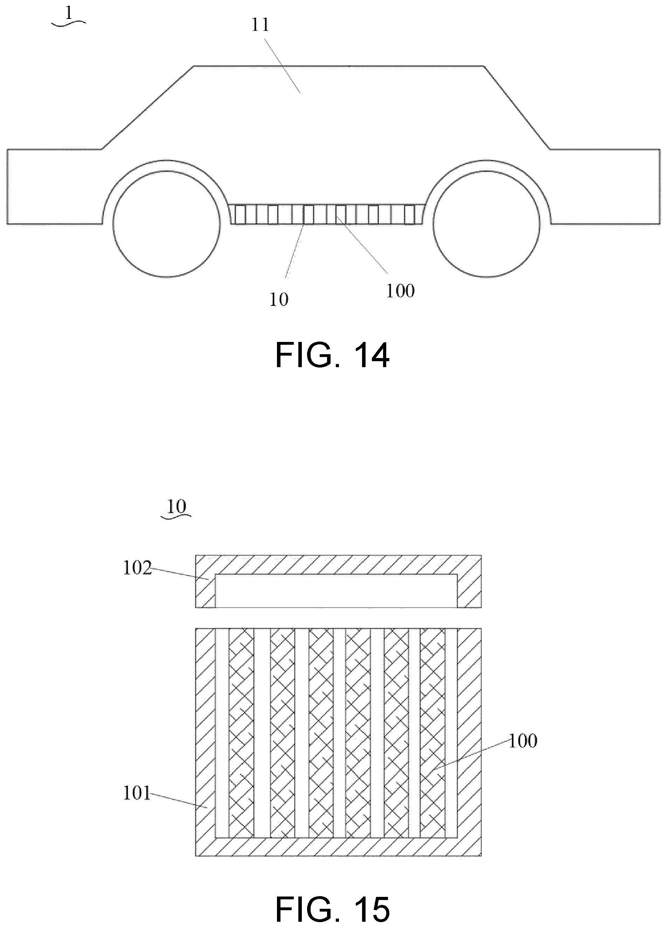

The disclosure further provides the battery pack 10. The battery pack 10 includes any of the embodiments of the secondary battery 100. Referring to FIG. 15, in an embodiment of the battery pack 10 according to the disclosure, the battery pack 10 includes a housing body 101, a housing cover 102, and multiple secondary batteries 100. The secondary batteries 100 are disposed in the housing body 101. The batteries 100 are connected in series or parallel to each other, or connected in a manner mixing serial and parallel connections. The housing cover 102 seals and covers the housing body 101 to protect the secondary batteries 100. It should be noted that, in addition to the secondary battery 100 according to the disclosure, the battery pack 10 may further include a battery pack thermal management system, a circuit board, etc. Details in this regard will not be further described in the following.

Referring to FIG. 14, the disclosure further provides an electronic apparatus 1. The electronic apparatus 1 includes an operation part 11 and the battery pack 10. The operation part 11 is electrically connected with the battery pack 10 to be electrically powered. As an example, in the embodiment, the electronic apparatus 1 is a vehicle. The vehicle may be a fuel vehicle, a gas vehicle or a novel energy vehicle. The novel energy vehicle may be a pure electric vehicle, a hybrid vehicle or a range extended vehicle. However, the disclosure is not limited to. The operation part 11 is a vehicle body. The battery pack 10 is disposed at the bottom part of the vehicle body, and provides electric power for the vehicle to travel or for in-vehicle electric components to operate. However, in other embodiments, the electronic apparatus may also be a cell phone, a portable apparatus, a notebook computer, a ship, an aircraft, an electric toy, an electric tool, etc. The aircraft may include an airplane, a rocket, a space shuttle, a spacecraft, etc. The operation part may be a unit component that receives electric power from the battery pack and performs a corresponding operation, such as a blade rotation unit of a fan, a vacuum operation unit of a vacuum cleaner. The electric toy may include a static or mobile electric toy, such as a game console, an electric car toy, an electric ship toy, an electric airplane toy, etc. The electric tool may include a metal cutting electric tool, a grinding electric tool, an assembly electric tool and a railway electric tool, such as an electric drill, an electric grinder, an electric wrench, an electric screwdriver, an electric hammer, an impact drill, a concrete vibrator and a planer. The embodiments of the disclosure do not intend to impose a specific limitation on the electric apparatus.

In the secondary battery 100 according to the disclosure, the outer edge of the first cover plate 141 is connected with the sidewall 112 by welding and seals the opening 113. The first current collector 143 is connected with the first cover plate 141 by welding. The first cover plate 141 includes the through hole 1411. The second cover plate 142 is fixed to the first cover plate 141 and seals and covers the through hole 1411. The secondary battery 100 can be sealed and packaged without performing a roll-grooving process and a pier-sealing process on the case 110. Therefore, the processes are simplified, the assembling efficiency is facilitated, and the height of a roll groove can be saved. Therefore, the spatial usage of the secondary battery 100 is facilitated. In addition, in the secondary battery 100 according to the disclosure, the electrical connection between the first current collector 143 and the case 110 may be further realized through conductive connection between the first current collector 143 and the first cover plate 141. Therefore, such structure also helps realize the pre-installed integration of the first cover plate 141 and the first current collector 143 outside the case 110 and reduces assembling processes. Meanwhile, the damage to the electrode assembly 130 when welding is performed facing the electrode assembly 130 between the first current collector 143 and the first cover plate 141 is also reduced. Moreover, in the secondary battery 100 according to the disclosure, the influence of the roll groove on the first current collector 143 and the welding difficulty of the case 110 are avoided, and the first cover plate 141 is permitted with a greater degree of freedom with respect to the first current collector 143 in terms of structure and thickness. Compared with welding the case 110 and the first current collector 143, welding the case 110 and the first cover plate 141 can increase the welding process window, welding leakage and welding penetration in the process of welding the first current collector 143 and the case 110 can be reduced, and foreign matters entering the case 110 is also reduced. Therefore, the disclosure effectively addresses some practical issues in the conventional technique and creates high value and usefulness in terms of practical use.

## Claims

1. A secondary battery (100), comprising:
a case (110), comprising an end wall (111) and a sidewall (112) surrounding the end wall (111), wherein an opening (113) is formed at an end of the sidewall (112) away from the end wall (111);
a terminal (120), passing through the end wall (111) and insulated from the end wall (111);
an electrode assembly (130), accommodated in the case (110), and comprising: a first tab (132), facing the opening (113); and a second tab (131), facing the end wall (111), the second tab (131) being electrically connected with the terminal (120);
a first current collector (143), disposed at an end of the electrode assembly (130) facing the opening (113), wherein the first current collector (143) is connected with the first tab (132) by welding; and
a cover assembly, comprising a first cover plate (141) and a second cover plate (142), wherein the first cover plate (141) covers the opening (113) and is connected with the sidewall (112) by welding, the first cover plate (141) is connected with the first current collector (143) by welding, the first cover plate (141) comprises a through hole (1411), and the second cover plate (142) is welded to the first cover plate (141) and seals the through hole (1411).

2. The secondary battery (100) as claimed in claim 1, wherein the first current collector (143) comprises a cover plate weld part (1432) and a tab weld part (1431), the cover plate weld part (1432) is connected with the first cover plate (141) by welding, and the tab weld part (1431) is connected with the first tab (132) by welding.

3. The secondary battery (100) as claimed in claim 2, wherein, along a height direction of the secondary battery (100), a projection of the through hole (1411) on the first current collector (143) covers the tab weld part (1431).

4. The secondary battery (100) as claimed in claim 3, wherein the cover plate weld part (1432) is disposed between the first cover plate (141) and the electrode assembly (130), and a side of the cover plate weld part (1432) away from the electrode assembly (130) is connected with the first cover plate (141) by welding.

5. The secondary battery (100) as claimed in claim 3, wherein the cover plate weld part (1432) is welded to an edge of the through hole (1411), and the tab weld part (1431) is recessed toward a side of the electrode assembly (130) with respect to the cover plate weld part (1432), and is connected with the first tab (132) by welding.

6. The secondary battery (100) as claimed in claim 3, wherein the case (110) is in a cylindrical shape, the first cover plate (141) is in a ring shape, and the through hole (1411) is provided coaxially with the first cover plate (141).

7. The secondary battery (100) as claimed in claim 3, wherein an outer diameter of the sidewall (112) is set as D, the tab weld part (1431) is distributed within an annular region (1434) with an end surface center of the electrode assembly (130) as a center, an inner circle diameter (D1) of the annular region (1434) is greater than or equal to 0.25 D, and an outer circle diameter (D2) of the annular region (1434) is less than or equal to 0.87 D.

8. The secondary battery (100) as claimed in claim 7, wherein a diameter of the through hole (1411) is greater than or equal to 0.43 D and less than or equal to 0.96 D.

9. The secondary battery (100) as claimed in any one of claims 1 to 8, wherein an inner edge of the first cover plate (141) comprises a recessed part (1414), the through hole (1411) is provided in the recessed part (1414), and the second cover plate (142) is at least partially accommodated in the recessed part (1414).

10. The secondary battery (100) as claimed in claim 9, wherein a bottom part of the recessed part (1414) comprises a platform region (1416), the platform region (1416) is disposed around the through hole (1411), the second cover plate (142) is installed to a side of the platform region (1416) away from the electrode assembly (130) and is connected with the platform region (1416) by welding.

11. The secondary battery (100) as claimed in claim 1, wherein an explosion proof structure (1421) is disposed on the second cover plate (142), the explosion proof structure (1421) comprises a notch provided on the second cover plate (142), and an opening of the notch is near the electrode assembly (130).

12. The secondary battery (100) as claimed in claim 1, wherein an explosion proof structure (1421) is disposed on the second cover plate (142), and the explosion proof structure (1421) comprises a second welding mark (148) between the first cover plate (141) and the second cover plate (142).

13. The secondary battery (100) as claimed in claim 3, wherein the secondary battery (100) further comprises a solution injection hole (121) and a blocking plate (122), the solution injection hole (121) is provided on the terminal (120), and the blocking plate (122) is welded to the terminal (120) and seals the solution injection hole (121).

14. A battery pack (10), comprising the secondary battery (100) as claimed in any one of claims 1 to 13.

15. An electronic apparatus (1), comprising the battery pack (10) as claimed in claim 14.
